# EUROPEAN PATENT APPLICATION

(11) **EP 2 003 562 A2**
(43) Date of publication of application: **17.12.2008**
(21) Application number: 08006434.8
(22) Date of filing: 31.03.2008
(51) Int. Cl.: G06F 11/267

(54) **Debugging techniques for a programmable integrated circuit**

(30) Priority: 13.06.2007 US 762647
(71) Applicant: Qualcomm Incorporated, San Diego, CA 92121-1714 (US)
(72) Inventor: Wei, Jian, San Diego, CA 92121-1714 (US); Pyla, Manojkumar, San Diego, CA 92121-1714 (US); Chen, Xufeng, San Diego, CA 92121-1714 (US)
(74) Representative: Heselberger, Johannes

(57) **Abstract**

Techniques for debugging a programmable integrated circuit are described. Embodiments include steps of initiating instruction-cache-misses in the integrated circuit using a remote computer executing a test program; substituting, during an instruction-cache-miss event, instructions in the application program with test instructions provided by the test program; and debugging the integrated circuit based on analysis of its responses to the test instructions. In exemplary applications, such techniques are used for debugging graphics processors of wireless communication system-on-chip devices, among other programmable integrated circuit devices.

## Description

### BACKGROUND

### I. Field

The present disclosure relates generally to the field of integrated circuits and, more specifically, to techniques for debugging a programmable integrated circuit.

### II. Background

Increasing complexity of programmable integrated circuits used in devices performing computationally intensive data processing -- for example, devices for mobile or wired communications, graphics processors, microprocessors, and the like-- creates a need for the development of sophisticated embedded (i.e., on-chip, or in-silicon) test systems adapted for in-situ debugging of such integrated circuits.

Conventional on-chip test systems utilize circuit-specific test architectures (such as scan-chain test architectures) that can consume significant portions of a chip's real estate. Such systems often lack flexibility in accommodating design modifications.

### SUMMARY

Techniques for debugging a programmable integrated circuit are described herein. In an embodiment, an off-chip computer executing a test program initiates pre-determined instruction-cache-misses on an integrated circuit running an application program. During an instruction-cache-miss, the off-chip computer substitutes instructions of the application program with test instructions contained in the test program. Responses of the integrated circuit to the test instructions are analyzed, and results of the analysis are used to debug the integrated circuit.

In exemplary designs, the inventive techniques are used for debugging processors and graphics processors of wireless or wired communication system-on-chip devices, among other programmable integrated circuits.

Various aspects and embodiments of the invention are described in further detail below.

The Summary is neither intended nor should it be construed as being representative of the full extent and scope of the present invention, which these and additional aspects will become more readily apparent from the detailed description, particularly when taken together with the appended drawings.

### BRIEF DESCRIPTION OF THE DRAWINGS

FIGS. 1A-1C are high-level schematic diagrams of exemplary systems for debugging an integrated circuit.

FIG. 2 is a flow diagram illustrating a method for debugging an integrated circuit using the systems of FIGS. 1A-1C.

FIG. 3 is a block diagram of a system including an exemplary programmable integrated circuit of the present invention.

The images in the drawings are simplified for illustrative purposes and are not depicted to scale. To facilitate understanding, identical reference numerals have been used, where possible, to designate identical elements that are common to the figures, except that suffixes may be added, when appropriate, to differentiate such elements.

The appended drawings illustrate exemplary embodiments of the invention and, as such, should not be considered as limiting the scope of the invention that may admit to other equally effective embodiments. It is contemplated that features or steps of one embodiment may be beneficially incorporated in other embodiments without further recitation.

### DETAILED DESCRIPTION

The term "exemplary" is used herein to mean "serving as an example, instance, or illustration." Any embodiment or design described herein as "exemplary" is not necessarily to be construed as preferred or advantageous over other embodiments or designs.

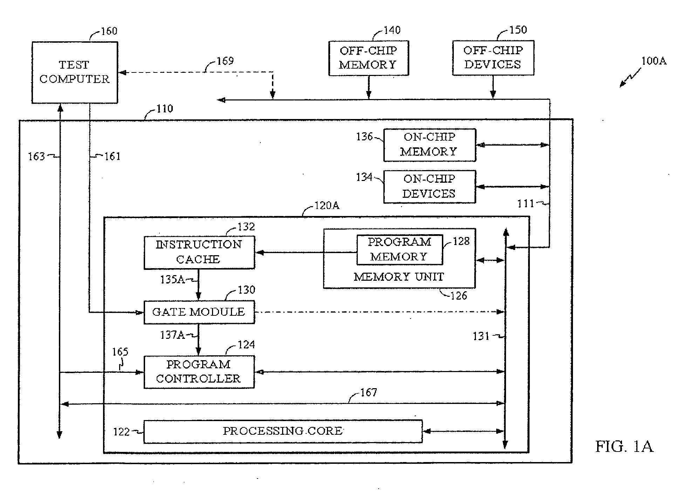

Referring to the figures, FIG. 1A depicts a high-level schematic diagram of an exemplary system 100A for debugging a programmable integrated circuit 120A in accordance with one embodiment of the present invention.

The system 100A illustratively comprises a system-on-chip (SOC) device 110 including the integrated circuit 120A, optional on-chip and off-chip devices 134 and 150 (for example, integrated circuit devices), and optional on-chip and off-chip electronic memories 136 and 140 that are interconnected using a system bus 111 of the SOC device, and a test computer 160.

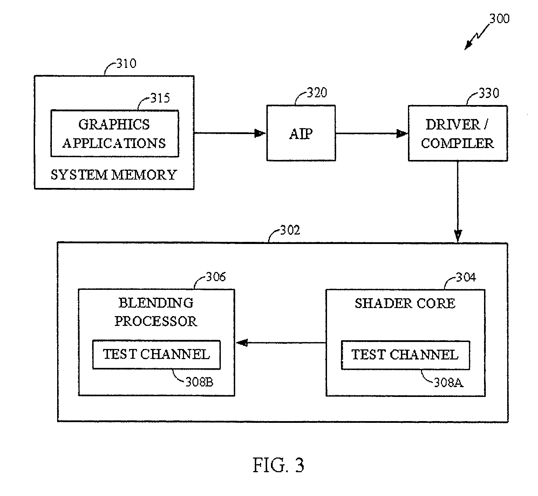

In exemplary applications, the integrated circuit 120A may be a portion of the SOC device 110 used in an apparatus for wireless or wired communications, processing video data, rendering graphics, among other apparatuses performing computationally intensive data processing, such as processors, graphics processors, and the like. In some embodiments, such an integrated circuit is a Q-shader graphics processing unit (GPU) of video data processing system, which salient features are discussed below in reference to FIG. 3. In particular, the Q-shader GPU may be a portion of a wireless communication apparatus, such as a cellular phone, a video game console, a personal digital assistant (PDA), a laptop computer, an audio/video-enabled device (e.g., video-enabled MP3 player), and the like.

Generally, the integrated circuit 120A comprises a processing core 122, a program controller 124, a memory unit 126 including a program memory 128, an instruction cache 132, and a gate module 130 adapted to generate "instruction cache miss" events or instruction-cache-misses in the integrated circuit.

Typically, data/command exchanges between the processing core 122, program controller 124, and memory unit 126 are performed via an internal system bus 131 of the integrated circuit 120A. However, other interfacing schemes (not shown) have been contemplated for the integrated circuit 120A and are within the scope of the present invention (for example, the program controller 124 or the memory unit 126 may directly be coupled to the processing core 122).

In operation, portions of program instructions of a respective application program are downloaded, in a pre-determined order, from the program memory 128 to the instruction cache 132. From the instruction cache 132, the program instructions are sequentially forwarded, via the gate module 130, to the program controller 124 that administers and monitors execution of the instructions by the processing core 122. In an alternate embodiment (shown in phantom in FIG. 1A only), the gate module 130 may forward the program instructions to the program controller 124 via the system bus 131.

The test computer 160 is connected to the integrated circuit 120A using interfaces 161 and 163 coupled to the gate module 130 and the system bus 131, respectively. In one embodiment, the interface 161 is used for transmitting requests for generating the "instruction cache miss" events in the integrated circuit 120A, and the interface 163 is used to monitor data processing in the integrated circuit 120A and perform debugging of the integrated circuit.

In the depicted embodiment, the program instructions of an application program running by the integrated circuit 120A are transmitted, via interface 135A, from the instruction cache 132 to the gate module 130. From the gate module 130, via interface 137A, these instructions are forwarded to the program controller 124. Upon a request initiated, via the interface 161, by the test computer 160, the gate module 130 may interrupt the flow of the program instructions from the instruction cache 132 to the program controller 124, thus generating an "instruction cache miss" event in the running application program.

During the "instruction cache miss" event, substitute instructions (for example, test instructions) may be provided, via a branch 165 of the interface 163, from the test computer 160 to the program controller 124. Alternatively, the substitute instructions may be provided to the program controller 124 via a branch 167 coupling the interfaces 163 and 131. Accordingly, execution of the respective application program or test instructions by the integrated circuit 120A may be monitored by the test computer 160 via the branch 167 or, alternatively, using an off chip link 169 (shown with broken line), which couples the test computer to the system bus 111 of the SOC 110.

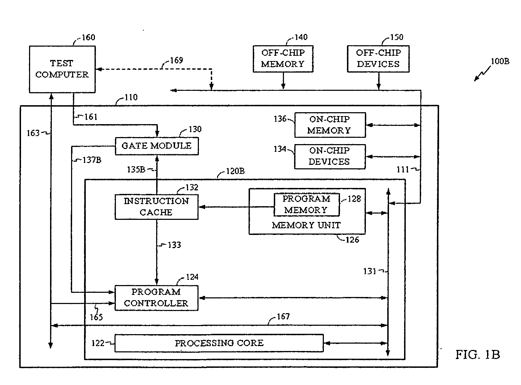

Referring to FIG. 1B, in one alternate embodiment, the gate module 130 may be disposed externally to the integrated circuit 120B. In this embodiment, at least portions of the respective interfaces 135B and 137B also extend beyond a perimeter of the integrated circuit 120B.

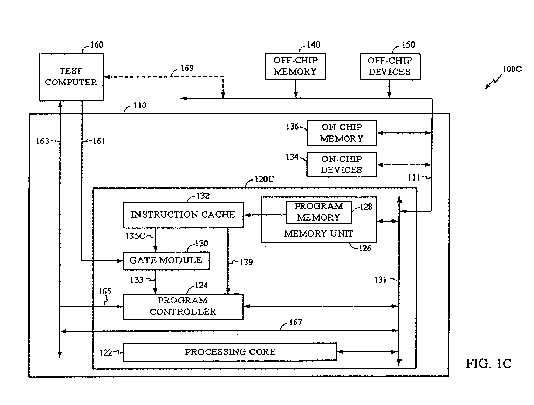

Referring to FIG. 1C, in another alternate embodiment, instructions of the application program and requests for the "instruction cache miss" events are selectively fetched in the program controller 124 from the gate module 130 and the instruction cache 132 using interfaces 133, 135C and 139. In this embodiment, in response to the received requests, the program controller 124 generates the "instruction cache miss" events in the integrated circuit 120C.

Together, the gate module 130 and interfaces 161, 163 form a test channel for debugging the integrated circuits 120A, 120B and 120C (hereinafter "integrated circuit 120") in the respective embodiments . Such a test channel occupies a small area of the chip and is broadly insensitive to particular architecture and/or design characteristics of the integrated circuit 120 or the SOC 110. The gate module 130 and the respective interfaces may be fabricated simultaneously with other elements of the integrated circuit 120 or the SOC 110. The test computer 160 may be coupled to the test channel using conventional electrical couplers, such as contact pads, contact pins, connectors, and the like.

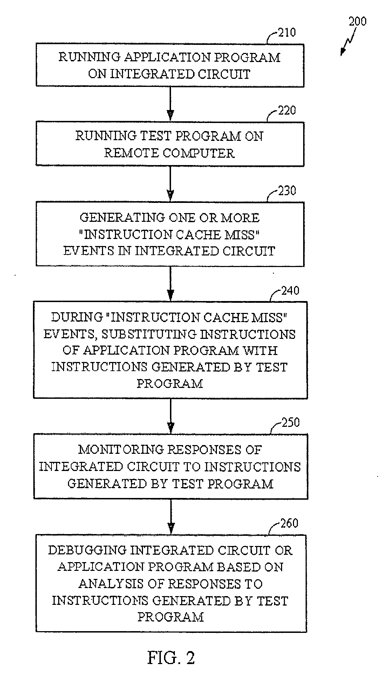

FIG. 2 depicts a flow diagram illustrating a method for debugging the integrated circuit 120 using the systems 100A-100C of FIGS. 1A-1C. In various embodiments, method steps of the method 200 are performed in the depicted order or at least two of these steps or portions thereof may be performed contemporaneously, in parallel, or in a different order. For example, steps 210 and 220 or steps 240, 250 and 260 may be performed contemporaneously or in parallel. Those skilled in the art will readily appreciate that the order of executing at least a portion of discussed below processes or routines may also be modified.

At step 210, an application program is loaded in the memory unit 126 and/or activated in the integrated circuit 120. Program instructions of the running application program are fetched, in a pre-determined order, from the program memory 128 in the instruction cache 132. From the instruction cache 132, via the gate module 130, the instructions are sequentially forwarded to the program controller 124.

At step 220, a pre-determined test program adapted for debugging the integrated circuit 120 and, optionally, the application program, is activated on the test computer 160. In one embodiment, the test program contains instructions (i.e., test instructions) that allow the test computer 160 to monitor program flow in the integrated circuit 120 and selectively initiate requests for "instruction cache miss" events at pre-determined steps of the running application program. In particular, during monitoring of execution of the application program, the test program may allow to the test computer 160 to monitor contents of internal registers of the integrated circuit 120 or memory cells of the memory unit 126.

In one embodiment, the test program and the test instructions are stored in a memory of the test computer 160. In alternate embodiments, these instructions or at least a portion of the test program may be stored in the memory unit 126, the memories 136 or 140, or memories (not shown) of the devices 134 or 150.

At step 230, at pre-determined steps in the test program or the application program, the test computer 160 initiates requests for the "instruction cache miss" events in the application program running in the integrated circuit 120. In one embodiment, such requests may be initiated based on analysis of information collected via monitoring the program flow or data processing in the integrated circuit 120.

The requests are forwarded, via the interface 161, to the gate module 130. In response, the gate module 130 generates the "instruction cache miss" events in the integrated circuit 120. Specifically, in response to each request, transmission of the instructions of the application program from the instruction cache 132 is terminated, and a program break point is set at a pre-determined step of the application program.

At step 240, during the "instruction cache miss" event, one or more instructions are sequentially stuffed, via the interface 163, from the test computer 160 in the program controller 124 for execution by the processing core 122. As such, during step 240, the application program's instructions remaining in the instruction cache 132 or the program memory 128 are substituted with the test instructions contained in the test program running on the test computer 160.

In particular, these test instructions may allow the test computer 160 to selectively monitor, modify, or replace, at a run time of the application program, contents of internal registers of the integrated circuit 120 or memory cells of the memory unit 126. In a further embodiment, the test instructions may allow to simulate pre-determined critical conditions or events in hardware or software elements of the integrated circuit 120.

At step 250, the test computer 160 monitors, via the interface 163, responses of the integrated circuit 120 to the test instructions fetched in the program controller 124 during the respective "instruction cache miss" event. For example, the test computer 160 may monitor contents of the internal registers or the memory cells of the integrated circuit 120 and compare the collected information with pre-calculated data contained in the test program.

Upon execution of the test instruction stuffed in the program controller 124 during a particular "instruction cache miss" event, transmission of the application program instructions from the instruction cache 132 to the program controller 124 is restored. In one embodiment, after the "instruction cache miss" event, the application program may be executed starting from a program step substituted by the respective "instruction cache miss" event. In another embodiment, the application program may be executed starting from a program step next to the program step substituted by the "instruction cache miss" event or, alternatively, from a program step specified in the test instructions.

At step 260, the test computer 160 analyses responses of the integrated circuit 120 to the test instructions provided during the "instruction cache miss" events to determine errors, if any, in execution of data processing operations by components of the integrated circuit 120. Then, based on these results, the integrated circuit 120 may be debugged using the test computer 160 or, alternatively, other remote processor. In one embodiment, results of a debugging process may be used to correct in-situ the identified error(s). Such debugging may be performed in real time (for example, during the "instruction cache miss" events) or, alternatively, upon completion of the application program. In a further embodiment, the results of such analysis may also be used for debugging the application program.

In exemplary embodiments, the method 200 may be implemented in hardware, software, firmware, or any combination thereof in a form of a computer program product comprising one or more computer-executable instructions. When implemented in software, the computer program product may be stored on or transmitted using a computer-readable medium, which includes computer storage medium and computer communication medium.

The term "computer storage medium" refers herein to any medium adapted for storing the instructions that cause the computer to execute the method. By way of example, and not limitation, the computer storage medium may comprise solid-sate memory devices, including electronic memory devices (e.g., RAM, ROM, EEPROM, and the like), optical memory devices (e.g., compact discs (CD), digital versatile discs (DVD), and the like), or magnetic memory devices (e.g., hard drives, flash drives, tape drives, and the like), or other memory devices adapted to store the computer program product, or a combination of such memory devices.

The term "computer communication medium" refers herein to any physical interface adapted to transmit the computer program product from one place to another using for example, a modulated carrier wave, an optical signal, a DC or AC current, and the like means. By way of example, and not limitation, the computer communication medium may comprise twisted wire pairs, printed or flat cables, coaxial cables, fiber-optic cables, digital subscriber lines (DSL), or other wired, wireless, or optical serial or parallel interfaces, or a combination thereof.

FIG. 3 depicts a block diagram of a device 300 comprising an exemplary programmable integrated circuit 302 of the present invention. Illustratively, the device 300 includes a system memory 310 containing graphics applications (i.e., computer programs) 315, an application programming interface (API) 320, a driver/compiler 330, and the Q-shader GPU 302 having a shader core 304 and a blending processor 306. In the depicted embodiment, the shader core 304 and the blending processor 306 comprise test channels 308A and 308B, respectively, that allow debugging of the respective device and/or the graphics applications 310.

The Q-shader GPU 302 may be compliant, for example, with a document "OpenVG Specification, Version 1.0," July 28, 2005, which is publicly available. This document is a standard for 2D vector graphics suitable for handheld and mobile devices, such as cellular phones and other referred to above wireless communication apparatuses. Additionally, the Q-shader GPU 302 may also be compliant with OpenGL2.0, OpenGL ES2.0, or D3D9.0 graphics standards.

In operation, each graphics application 315 (for example, video game or video conferencing, among other video applications) generates high-level commands that are communicated, via the API 320, to the driver/compiler 330. The driver/compiler 330 converts these high-level commands in individual application sub-programs, which are executed by the Q-shader GPU 302. In the Q-shader GPU 302, execution of the application sub-programs may be performed sequentially or, alternatively, concurrently.

Referring back to FIGS. 1A-1C, at least portions of the device 300 may be implemented using the SOC 110. In particular, the system memory 310 and driver/compiler 330 or portions thereof may be implemented using the electronic memories 136 or 140 and devices 134 or 150, respectively, and the API 320 may be reduced to practice using respective branches of the system bus 111. Correspondingly, the shader core 304 and the blending processor 306 may be fabricated as the integrated circuit(s) 120, where the respective test channels 308A, 308B include the gate module 130 and interfaces 161, 163.

The previous description of the disclosure is provided to enable any person skilled in the art to make or use the disclosure. Various modifications to the disclosure will be readily apparent to those skilled in the art, and the generic principles defined herein may be applied to other variations without departing from the spirit or scope of the disclosure. Thus, the disclosure is not intended to be limited to the examples described herein but is to be accorded the widest scope consistent with the principles and novel features disclosed herein.

## Claims

1. A device comprising:
a processor adapted to execute instructions of a running program; and a test channel adapted to interface with the processor and an external test computer for testing and debugging one of the instructions and the processor.

2. The device of claim 1, wherein the processor and the test channel are on a chip.

3. The device of claim 1, wherein the processor and a portion of the test channel are on a chip.

4. The device of claim 1, wherein the processor includes a program controller and an instructions cache adapted to transfer the instructions to the program controller; and the test channel is adapted to, upon a request initiated by the test computer, interrupt the flow of the instructions from the instruction cache to the program controller to generate an instruction-cache-miss in the running program.

5. The device of claim 4, wherein during testing, the program controller is adapted to be stuffed with one or more instructions sequentially from the test computer, via the test channel, for execution, and any instructions remaining in the instruction cache or an internal memory of the processor are substituted with the test instructions contained in a test program running on the test computer.

6. The device of claim 5, wherein the processor is an integrated circuit adapted to be debugged based on at least one error generated by at least one response to the test instructions.

7. The device of claim 5, wherein the test instructions are adapted to allow the test computer to monitor or modify contents of internal registers or memory cells of the internal memory of the processor or simulate critical conditions in the processor.

8. The device of claim 5, wherein, after execution of the test instructions, the processor is adapted to continue execution of the running program from one of (i) a program step substituted by the instruction-cache-miss, (ii) a program step next to the program step substituted by the instruction-cache-miss, and (iii) a program step specified in the test instructions.

9. The device of claim 1, wherein the processor is a graphics processor.

10. The device of claim 1, wherein the processor is a portion of a wireless communication apparatus selected from the group consisting of a cellular phone, a video game console, a personal digital assistant (PDA), a laptop computer, an audio/video-enabled device, and a portion of a stationary video-enabled device.

11. An integrated circuit comprising:
a processor adapted to execute instructions of a running program; and a test channel adapted to interface with the processor and an external test computer for testing and debugging one of the instructions and the processor.

12. The integrated circuit of claim 11, wherein the processor and the test channel are on a chip.

13. The integrated circuit of claim 11, wherein the processor and a portion of the test channel are on a chip.

14. The integrated circuit of claim 11, wherein the processor includes a program controller and an instructions cache adapted to transfer the instructions to the program controller; and wherein the test channel is adapted to, upon a request initiated by the test computer, interrupt the flow of the instructions from the instruction cache to the program controller to generate an instruction-cache-miss in the running program.

15. The integrated circuit of claim 14, wherein during testing, the program controller is adapted to be stuffed with one or more instructions sequentially from the test computer, via the test channel, for execution, and any instructions remaining in the instruction cache or an internal memory of the processor are substituted with the test instructions contained in a test program running on the test computer.

16. The integrated circuit of claim 15, wherein the processor is adapted to be debugged based on at least one error generated by at least one response to the test instructions.

17. The integrated circuit of claim 15, wherein the test instructions are adapted to allow the test computer to monitor or modify contents of internal registers or memory cells of the internal memory of the processor or simulate critical conditions in the processor.

18. The integrated circuit of claim 15, wherein, after execution of the test instructions, the processor is operative to continue execution of the running program from one of (i) a program step substituted by the instruction-cache-miss, (ii) a program step next to the program step substituted by the instruction-cache-miss, and (iii) a program step specified in the test instructions.

19. The integrated circuit of claim 11, wherein the processor is a graphics processor.

20. The integrated circuit of claim 11, wherein the processor is a portion of a wireless communication apparatus selected from the group consisting of a cellular phone, a video game console, a personal digital assistant (PDA), a laptop computer, an audio/video-enabled device, and a portion of a stationary video-enabled device.

21. A device comprising:
a blending processor adapted to execute a first set of instructions of a running program and having a first test channel adapted to interface with the blending processor and an external test computer for testing and debugging the first set of instructions or the blending processor; and
a shader core adapted to execute a second set of instructions of a running program and having a second test channel adapted to interface with the shader core and the external test computer for testing and debugging the second set of instructions or the shader core.

22. The device of claim 21, wherein each of the blending processor and the shader core includes a program controller and an instructions cache adapted to transfer the first set of instructions to the program controller; wherein the first test channel is adapted to, upon a first request initiated by the test computer, interrupt the flow of the first set of instructions from the instruction cache to the program controller of the blending processor to generate a first instruction-cache-miss in the running program; and wherein the second test channel is adapted to, upon a second request initiated by the test computer, interrupt the flow of the second set of instructions from the instruction cache to the program controller of the shader core to generate a second instruction-cache-miss in the running program.

23. The device of claim 22, wherein during testing, one of the program controller of the blending processor and the program controller of the shader core is adapted to be stuffed with one or more instructions sequentially from the test computer, via the first test channel or the second test channel, respectively, for execution, and any instructions remaining in the instruction cache or an internal memory of the blending processor or the shader core are substituted with the test instructions contained in a test program running on the test computer.

24. The device of claim 23, wherein one of the blending processor and the shader core is adapted to be debugged based on at least one error generated by at least one response to the test instructions.

25. The device of claim 23, wherein the test instructions allow the test computer to monitor or modify contents of internal registers or memory cells of the internal memory of the blending processor or the shader core or simulate critical conditions in the blending processor or the shader core.

26. The device of claim 23, wherein, after execution of the test instructions, one of the blending processor and the shader core is adapted to continue execution from one of (i) a program step substituted by the instruction-cache-miss, (ii) a program step next to the program step substituted by the instruction-cache-miss, and (iii) a program step specified in the test instructions.

27. The device of claim 21, wherein blending processor and the shader core are portions of a Q-shader graphics processing unit.

28. The device of claim 27 wherein the Q-shader graphics processing unit is a portion of a wireless communication apparatus selected from the group consisting of a cellular phone, a video game console, a personal digital assistant (PDA), a laptop computer, an audio/video-enabled device, and a portion of a stationary video-enabled device.

29. A processor comprising:
an integrated circuit operative to execute instructions of a running program; and
a test channel adapted to interface with an external test computer for testing and debugging one of the instructions and the integrated circuit.

30. The processor of claim 29, wherein the integrated circuit includes a program controller and an instructions cache adapted to transfer the instructions to the program controller; and wherein the test channel is adapted to, upon a request initiated by the test computer, interrupt the flow of the instructions from the instruction cache to the program controller to generate an instruction-cache-miss in the running program.

31. The processor of claim 30, wherein during testing, the program controller is operative to be stuffed with one or more instructions sequentially from the test computer, via the test channel, for execution, and any instructions remaining in the instruction cache or an internal memory are substituted with the test instructions contained in a test program running on the test computer.

32. The processor of claim 31, wherein the integrated circuit is adapted to be debugged based on at least one error generated by at least one response to the test instructions.

33. The processor of claim 31, wherein the test instructions allow the test computer to monitor or modify contents of internal registers or memory cells of the internal memory of the integrated circuit or simulate critical conditions in respective integrated circuit.

34. The processor of claim 31, wherein, after execution of the test instructions, the integrated circuit is adapted to continue execution of the running program from one of (i) a program step substituted by the instruction-cache-miss, (ii) a program step next to the program step substituted by the instruction-cache-miss, and (iii) a program step specified in the test instructions.

35. The processor of claim 29, wherein the integrated circuit is a portion of a wireless communication apparatus selected from the group consisting of a cellular phone, a video game console, a personal digital assistant (PDA), a laptop computer, an audio/video-enabled device, and a portion of a stationary video-enabled device.

36. The processor of claim 29, wherein the integrated circuit comprises at least one of a blending processor and a shader core.

37. The processor of claim 29, wherein the integrated circuit is a programmable integrated circuit.

38. The processor of claim 29, wherein the integrated circuit is a Q-shader graphics processing unit.

39. A computer program product including a computer readable medium having instructions to debug a programmable integrated circuit by causing a computer to:
initiate at least one request for an instruction-cache-miss in the integrated circuit using a remote test computer executing a test program adapted for debugging the integrated circuit;
substitute one or more instructions in the application program with test instructions provided by the test program; and
debug the integrated circuit based on analysis of responses of the integrated circuit to the test instructions.

40. The computer program product of claim 39, wherein the integrated circuit is a processor or a graphics processor.

41. The computer program product of claim 39, wherein the integrated circuit is a portion of a wireless communication apparatus selected from the group consisting of a cellular phone, a video game console, a personal digital assistant (PDA), a laptop computer, and an audio/video-enabled device, or a portion of a stationary video-enabled device.

42. The computer program product of claim 39, wherein the test computer is adapted to monitor or modify contents of internal registers or memory cells of an internal memory of the integrated circuit or simulate critical conditions in the integrated circuit.

43. The computer program product of claim 39, wherein after execution of the test instructions the application program continues from (i) a program step substituted by the instruction-cache-miss, (ii) a program step next to the program step substituted by the instruction-cache-miss, or (iii) a program step specified in the test instructions.

44. A method for debugging a programmable integrated circuit, comprising:
initiating at least one request for an instruction-cache-miss in the integrated circuit using a remote test computer executing a test program adapted for debugging the integrated circuit;
substituting one or more instructions in the application program with test instructions provided by the test program; and
debugging the integrated circuit based on analysis of responses of the integrated circuit to the test instructions.

45. The method of claim 44, wherein the integrated circuit is a processor or a graphics processor.

46. The method of claim 44, wherein the integrated circuit is a portion of a wireless communication apparatus selected from the group consisting of a cellular phone, a video game console, a personal digital assistant (PDA), a laptop computer, and an audio/video-enabled device, or a portion of a stationary video-enabled device.

47. The method of claim 44, wherein the test computer monitors or modifies contents of internal registers or memory cells of an internal memory of the integrated circuit or simulates critical conditions in the integrated circuit.

48. The method of claim 44, wherein after execution of the test instructions the application program continues from (i) a program step substituted by the instruction-cache-miss, (ii) a program step next to the program step substituted by the instruction- cache-miss, or (iii) a program step specified in the test instructions.

49. A system comprising:
means for initiating at least one request for an instruction-cache-miss in a programmable integrated circuit using a remote test computer executing a test program adapted for debugging the integrated circuit;
means for substituting one or more instructions in a application program with test instructions provided by the test program; and
means for debugging the integrated circuit based on analysis of responses of the integrated circuit to the test instructions.

50. The system of claim 49, wherein the integrated circuit is at least one of a processor, a graphics processor and a Q-shader graphics processing unit.

51. The system of claim 49, wherein the integrated circuit is a portion of a wireless communication apparatus selected from the group consisting of a cellular phone, a video game console, a personal digital assistant (PDA), a laptop computer, an audio/video-enabled device, and a portion of a stationary video-enabled device.

52. The system of claim 49, wherein the test computer monitors or modifies contents of internal registers or memory cells of an internal memory of the integrated circuit or simulates critical conditions in the integrated circuit.

53. The system of claim 49, wherein after execution of the test instructions the application program continues from one of (i) a program step substituted by the instruction-cache-miss, (ii) a program step next to the program step substituted by the instruction- cache-miss, and (iii) a program step specified in the test instructions.
